# EUROPEAN PATENT SPECIFICATION

(11) **EP 1 634 292 B1**
(45) Date of publication and mention of the grant of the patent: **09.04.2008**
(21) Application number: 04734707.5
(22) Date of filing: 25.05.2004
(51) Int. Cl.: G11B 27/00, G11B 27/034

(54) **EDIT DECISION LIST RECORDING SYSTEM IN A MULTI-CAMERA TV PRODUCTION .**
EDIT-ENTSCHEIDUNGSLISTE AUFNAHMESYSTEM IN EINEM MULTI-KAMERA TV PRODUKTION.
SYSTEME D'ENREGISTREMENT DE LISTE DE DECISION D'EDITION DANS UNE PRODUCTION MULTICAMERA POUR TV.

(30) Priority: 26.05.2003 GR 2003100237
(43) Date of publication of application: 15.03.2006
(73) Proprietor: Achillopoulos, Evangelos, Alimos, 174 55 Athens (GR)
(72) Inventor: Achillopoulos, Evangelos, Alimos, 174 55 Athens (GR)
(74) Representative: Papaconstantinou, Helen
(86) International application number: PCT/GR2004/000031
(87) International publication number: WO 2004/105031

(56) References cited:
- EP-A- 0 438 299
- WO-A-00/39997
- US-A- 5 307 456
- US-A1- 2002 175 931
- NOWARA T: "HALZBEIT IN DER DIGITALEN NONLINEAREN NACHBEARBEITUNG. PRAXISNAHE BETRACHTUNGEN UND SYSTEMUBERBLICK" FERNSEH UND KINOTECHNIK, VDE VERLAG GMBH. BERLIN, DE, vol. 49, no. 12, 1 December 1995 (1995-12-01), pages 715-720,722, XP000545308 ISSN: 0015-0142

## Description

The present invention is directed to the field of video recordings and particularly to the procedures of recording and processing (editing) primary video footage.

Production of a TV program requires a laborious and time-consuming procedure. Thus, there is initially performed the shooting of "takes", usually from multiple cameras, of a TV program, for instance of a TV serial, commercial, game, etc. The director of the production selects the takes to be used, among the multiple takes from the multiple cameras.

The sequence of the selected takes is recorded on a magnetic medium, typically a videotape that constitutes the initial master tape of the production. Simultaneously, all the shots from all cameras are recorded separately on additional videotapes. After the end of a working day of shooting, all this material is transported in a production (editing) laboratory, where the final processing of the production, comprising corrections, deletions, additions and changes of points of view, is performed. All these procedures are time-consuming and fairly hard to perform and require a perfect synchronization between the various takes during change-over.

Additionally, in the newer ("non-linear") editing systems, multiple transfers of video data between tapes and hard disk and vice-versa degrades image quality.

US Patent No 200220175931 A1 (Holz et al.) discloses a system for organizing a TV production in advance and creating a "scenario" that is executed at the time of the recording. It is not concerned with the post-production phase of the TV production, and the script file that it creates does not comprise decisions made during the live production stage. Furthermore, it does not disclose the recording of the primary material from all sources and its hierarchical organization in a tree structure.

From European Patent Application No EP 0424903 A2 (NEC) it is known a method of organizing video or audio data in compact disk or similar magnetic recording medium. This method concerns data that are definitively and immovably recorded and their organization after the post-production stage; it is directed to the distribution stage of a production and not to the live production and post-production stages.

European Patent Application No EP 0438299 A2 (SONY Corp.) describes post-production offline editing systems. The decision list that they create is completely unrelated to the decisions made during the live production stage.

US Patent No 5,307,456 (McKey, M.T.) discloses an integrated multi-media production and authoring system comprising a digital communications network to convey information in real time. This system requires specially designed cameras, containing a communications network interface and communications signal encoding/decoding hardware and/or software and/or specially built device translators interposed in the communications network lines.

The object of the present invention is to overcome the above-mentioned disadvantages. In particular, the present invention proposes a system of recording and editing of TV productions that uses universally available video recording and editing equipment without the need of special translators or other logic-containing devices to interlink such equipment.

Further, the present invention proposes a system of recording and editing of TV productions in which the total production time is significantly reduced.

Further still, the present invention proposes a system of recording and editing of TV productions in which the procedure of editing of the recordings is greatly facilitated.

Finally, the present invention provides a system of recording and editing of TV productions that gives an improved image quality.

Accordingly, the present invention consists in an integrated system of recording and editing of a TV production with multiple cameras, which comprises:
- multiple sources of video image that provide an output of different points of view of the scene or other video image sources;
- an input signal selector;
- an audio mixer, optionally with multiple output channels;
- a video mixer, which receives the different points of view from the multiple sources of video image and provides in the output the point of view of the source selected by the input signal selector;
- a takes storage system, capable of storing on a random access magnetic recording medium all the outputs from the multiple sources and from the video and the audio mixers;
- a video recording editor able to use the material that is stored in the takes storage system and to create, using the appropriate software, an edited form of the video production;
characterized in that said takes storage system receives from the video mixer a camera selection signal inherently and universally provided by said video mixer and uses that signal without any processing, with the possible exception of conventional electrical signal conditioning, to create an edit decision list directly usable by the video recording editor or available to an external processing system in a form compatible therewith.

The invention will be described in further detail with reference to the attached drawings, in which:
- figure 1 is a schematic diagram of the recording and editing system of a TV production according to the present invention;
- figure 2 is a portion of an Edit Decision List created by the system of figure 1.

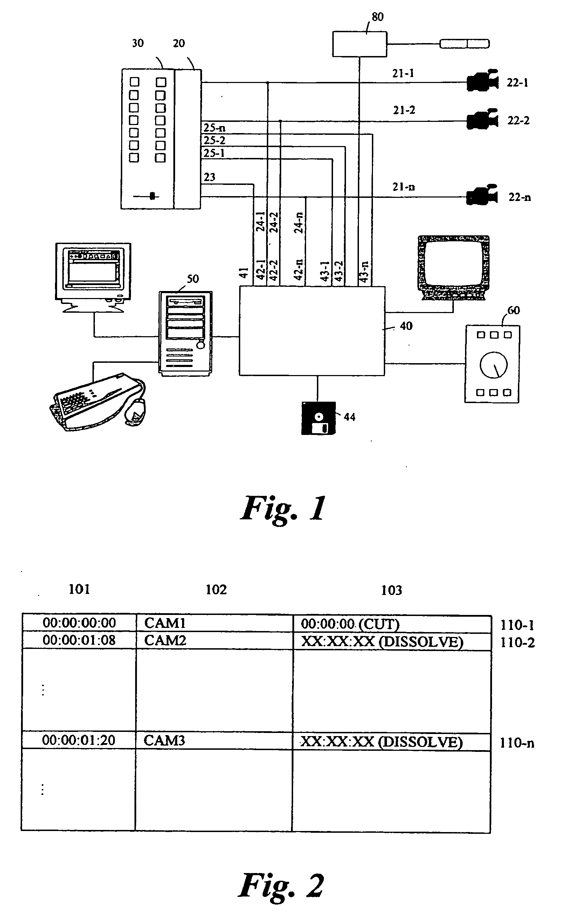

Figure 1 shows a schematic diagram of a preferred embodiment of the recording and editing system of the present invention. The system, indicated generally with the numeral 10, comprises a video mixer 20, that receives output signals 21-1, 21-2, ... , 21-n from multiple video sources 22-1, 22-2, ..., 22-n. Each video source signal represents a different point of view ("angle").

A point of view selector 30 selects, among these output signals 21-1, 21-2, ..., 21-n, the one that will be used in the original of the production. The selected output is transmitted as a signal output 23 from the video mixer 20. Simultaneously, the video mixer 20 transmits in addition the output signals 24-1, 24-2, ..., 24-n from all video cameras (or other video sources) 22-1, 22-2, ..., 22-n. Additionally, the video mixer transmits a status indication ("tally output", selected/non-selected/transition) for each video camera 25-1, 25-2, ..., 25-n. The system includes also commonly an audio mixer 80 with multiple output channels.

The takes storage system 40 receives, in appropriate signal inputs 41, 42-1, 42-2,..., 42-n, the selected signal output 23 and the corresponding output signals 24-1, 24-2, ... , 24-n from the video cameras. In addition, the takes storage system 40 receives in inputs 43-1, 43-2, ..., 43-n the corresponding status indications 25-1, 25-2, ..., 25-n.

The signals are recorded separately on random access magnetic storage media 44, such as for example magnetic disks, after their conversion in an appropriate digital form (e.g. DV50, MPEG2, etc.). At the same time, the takes storage system creates an Edit Decision List (EDL), using the changes in the status indications that it receives on inputs 43-1, 43-2, ..., 43-n.

In figure 2 there is shown a portion of such an Edit Decision List file 100. As seen, the file consists of a multiplicity of sequential entries 110-1, 110-2, ..., 110-n. Each entry comprises essentially the following fields:
- time signature field 101: it contains the distance in time between the start of the action and the start of the production in the form hours:minutes:seconds: frames
- selected input field 102: it contains the number of the source (or, equivalently, of the magnetic disk file where its output is recorded) from which the point of view has been included in the original (master) of the production
- transition mode field 103: it contains a number that represents one of a series of possible modes of transition from a point of view to the next (cut or dissolve, as indicated by this number, where 0 means cut and ≠0 means a transition duration).

All those files are available to the video recording processor (non-linear editing system) 50, for their final processing and the creation of the definitive, edited master tape of the TV production. Additionally, the Edit Decision List can be exported in a form compatible with other commercial editing systems, such as : "AAF", "MXF", etc.

According to an especially preferred embodiment of the invention, all the storage system control operations that can be performed from the control station can be displayed in the form of drop-down menus on any TV set and controlled by means of a jog/shuttle control box 60 from the control position.

According to another especially preferred embodiment of the invention, the primary material from the video image sources is hierarchically organized in a tree-like configuration during storage (e.g. according to an episode:scene:take scheme for a TV serial; or a event:part:segment scheme for the broadcasting of a sports event). In this manner the search procedure of the primary material is simplified.

Finally, in a further special case relating to the live broadcasting of sports events, there is provided the ability of storing at will, in a separate file, of marking and of hierarchical organization of defined time intervals (e.g. ±10 seconds) about a particular incident. For example, by pushing at the control station 60 a button which, for a particular application, is labeled "goal", "foul", etc., a copy is automatically created of the Edit Decision List file for the 10 seconds immediately preceding and the 10 seconds immediately following the moment at which the button was pushed, this copy is labeled according to the above described hierarchical tree structure, depending on the button that caused its storage, and can eventually be searched using this labeling.

The above described recording and editing system for a TV production according to the present invention has the following advantages when compared with the presently available similar systems:
1. Integration: the system provides the functions of point of view selection and of editing of a TV production within a single assembly. The system is compatible with all video mixers.
2. Improved quality: owing to the fact that all operations are performed under the same format, transfers from video cassette or tape to disk are avoided, and thus also any degradation of quality due to the conversion between analog and digital form or between different digital encodings.
3. Functionality: editing can be performed concurrently, or within a very short delay after the recording. This allows the director of the production to visualize the final form of the scene and to make immediate decisions, such as for example to re-record a take of the scene.
4. Flexibility: Due to the common timeline for all points of view, changes (such as deletions, additions, changes of point of view or other source) can be made directly, and the results be controlled and modified quickly.
5. Reduction of total work time: This is because editing can be performed concurrently with the recording, owing to the creation of the Edit Decision List file, while there is also no time delay for the storage in digital form of the signals from the takes. This reduction can be of the order of 10-12 hours per work day in the preferred embodiment.
6. Cost reduction: The cost reduction results from various factors. On the one hand, there is no cost associated with the storage of the signals derived from the cameras (cost of acquisition and maintenance of video recorders, tapes, etc.), while on the other hand there is a cost reduction in all aspects of the production due to the increased productivity.

It is understood that the above described preferred embodiment of the invention does not limit its scope, which is defined in the claims. Further, it is expected that one skilled in the art can perform changes and modifications to the invention within its scope.

## Claims

1. System (10) for recording and editing of a TV production with multiple cameras, which comprises:
- multiple sources of video image (22-1, 22-2, ..., 22-n) that provide an output of different points of view (21-1, 21-2, ..., 21-n) of the scene or other video image sources;
- an input signal selector (30);
- an audio mixer (80), optionally with multiple output channels;
- a video mixer (20), which receives the different takes from the multiple sources of video image and provides in the output (23) the take of the source selected by the input signal selector (30);
- a takes storage system (40), capable of storing on a random access magnetic recording medium (44) all the outputs from the multiple sources and from the video (20) and the audio (80) mixers;
- a video recording editor (50) capable of using the material that is stored in the takes storage system and to create, using the appropriate software, an edited form of the video production;
**characterized in that** said takes storage system (40) receives from the video mixer (20) the "tally output" camera selection signal (25-1, 25-2, ..., 25-n) inherently and universally provided by said video mixer (20) and uses that signal without any processing, with the possible exception of conventional electrical signal conditioning, to create an edit decision list (100) directly usable by the video recording editor (50) or available to an external processing system in a form compatible therewith.

2. System according to claim 1, whereby said edit decision list (100) contains additional information, relating to the mode of transition between sources.

3. System according to any one of claims 1 or 2, whereby all the takes storage system (40) control functions are performed from a control station (60) and can be displayed in the form of drop-down menus on any TV set and controlled with a jog/shuttle control box from the control station (60).

4. System according to any one of claims 1 to 3, whereby the primary material derived from the video image and audio sources is hierarchically organized in a tree-like configuration during storage.

5. System according to any one of claims 1 to 3, additionally providing the ability for selective storage, in a separate edit decision list file (100) of labeling and of hierarchical organization in a tree-like structure of defined time intervals about a particular incident.

## Patentansprüche

1. System (10) für Aufnahme und das Redigieren einer TV Produktion mit mehrfachen Kameras, die enthält:
- mehrfache Quellen des Videobildes (22-1, 22-2,..., 22 n) die einen Ausgang der unterschiedlichen Punkte der Ansicht (21-1, 21-2,..., 21 n) von der Szene oder von anderen Videobildquellen liefern;
- ein Eingangssignal vorwahl (30);
- ein Audiomischer (80), beliebig mit mehrfachen Ausgang Führungen;
- ein videomischer (20), der das unterschiedliche Nehmen von den mehrfachen Quellen des Videobildes empfängt und im Ausgang (23) das Nehmen der Quelle zur Verfügung stellt, die durch den Eingangssignalvorwahl (30) vorgewählt wird;
- ein Nehmenspeichersystem (40), ein fähig zur Speicherung auf einem gelegentlicher Zugang magnetischen Aufnahmemittel (44) aller Ausgänge von den mehrfachen Quellen und von dem video (20) und von den Audio (80) Mischern;
- ein Videoaufzeichnung Herausgeber (50) fähig zum Verwenden des Materials, das im Nehmenspeichersystem und gespeichert wird mit der passenden Software, eine redigierte Form zu verursachen, der videoproduktion;
**gekennzeichnet** in dem empfängt besagtes Nehmenspeichersystem (40) vom videomischer (20) das « Tally output » Kameravorwählersignal (25-1, 25-2,..., 25 n) in sich selbst und allgemeinhin versehen von besagtem videomischer (20) und vom Gebrauch daß Signal, ohne irgendwie zu verarbeiten, mit der möglichen Ausnahme der herkömmlichen elektrischen Signalformung, zum einer redigieteneintscheidung Liste (100) direkt zu erstellen verwendbar durch den Videoaufzeichnung Herausgeber (50) oder vorhanden für ein Auswärtsbearbeitllngsystem in einer Form, die damit kompatibel ist.

2. System entsprechend Anspruch 1, hingegen besagt Entscheidung Liste (100) redigieren Sie enthält zusätzliche Informationen, in bezug auf den Modus des überganges zwischen Quellen.

3. System entsprechend irgendeinem von Ansprüchen 1 oder 2, hingegen alle Nehmenspeichersystem (40) Steuerfunktionen von einer Kontrollstation (60) durchgeführt werden und in Form von Drop-Down-Menüs auf irgendeinem Fernsehapparat Satz angezeigt werden und mit einem Stoß/ einem Doppelventilkegelsteuerkasten von der Kontrollstation (60) gesteuert werden können.

4. System entsprechend irgendeinem von Ansprüchen 1 bis 3, hingegen das Primärmaterial; das vom Videobild und von den Audioquellen abgeleitet wird, hierarchisch in a Baum-wie Konfiguration während der Ablage organisiert wird.

5. System entsprechend irgendeinem von Ansprüchen 1 bis 3, hingegen die Fähigkeit für vorgewählte Ablage, in einem unterschiedlichem, zusätzlich, zur Verfügung stellend Entscheidung Liste Akte (100) redigieren Sie, des Beschriftens und der hierarchischen Organisation in a Baum-wie Struktur der definierten Zeitabstände über ein bestimmtes Ereignis.

## Revendications

1. Système (10) pour l'enregistrement et l'édition d'une production de TV avec les appareils-video multiples, qui comporte ;
- sources multiples d' image visuelle (22-1, 22-2,..., 22 n) qui fournissent un résultat de différents points de vue (21-1, 21-2,..., 21 n) de la scène ou d'autres sources d'image visuelle ;
- un sélecteur de signal d'entrée (30);
- un mélangeur audio (80), sur option avec les canaux à sorties multiples ;
- un mélangeur visuel (20), qui reçoit les prises différentes des sources multiples d'image visuelle et fournit dans le rendement (23) la prise de la source choisie par le sélecteur de signal d'entrée (30) ;
- un système de stockage de prises (40), capables de stocker sur un milieu magnétique d'enregistrement d'accès sélectif (44) toutes les sorties des sources multiples et de la vidéo (20) et (des 80) mélangeurs audio ;
- un rédacteur d'enregistrement visuel (50) capable d'employer le matériel qui est stocké dans le système de stockage de prises et pour créer, en utilisant le logiciel approprié, une forme éditée de la production visuelle ;
**caractérisé en ce que** le système de stockage de prises (40) reçoit du mélangeur visuel (20) le signal de choix d'appareil-video produit « Tally output » (25-1, 25-2,..., 25 n) en soi et universellement fourni par ledit mélangeur visuel (20) et utilisations qui signalent sans traiter, à l'exception possible du traitement de signal électrique conventionnel, de créer une liste de décision d'édition (100) directement utilisable par le rédacteur d'enregistrement visuel (50) ou disponible à un système de traitement externe sous une forme compatible en conséquence.

2. Le système selon la revendication 1, par lequel dit éditiez la liste de décision (100) contient l'information additionnelle, concernant le mode de la transition entre les sources.

3. Système selon l'une quelconque de revendications 1 ou 2, par lequel toutes opérations de service de système de stockage de prises 40) (soient exécutées d'une station de commande (60) et puissent être montrées sous forme de menus drop-down sur n'importe quel ensemble de TV et être commandées avec un essai/une boîte commande de navette de la station de commande (60).

4. Système selon l'une quelconque de revendications 1 à 3, par lequel le matériel primaire dérivé de l'image visuelle et des sources audio soit hiérarchiquement organisé dans a arbre-comme la configuration pendant le stockage.

5. Système selon l'une quelconque de revendications 1 à 3, par lequel en fournissant en plus la capacité pour le stockage sélectif, dans un séparé éditiez le dossier de liste de décision (100), de marquer et de l'organisation hiérarchique dans a arbre-comme la structure des intervalles définis de temps au sujet d'un incident particulier.
